# EUROPÄISCHE PATENTANMELDUNG

(11) **EP 3 086 276 A1**
(43) Veröffentlichungstag der Anmeldung: **26.10.2016**
(21) Anmeldenummer: 15164302.0
(22) Anmeldetag: 20.04.2015
(51) Int. Cl.: G06Q 50/04

(54) **SYSTEM UND VERFAHREN ZUR ÜBERMITTLUNG VON INFORMATIONEN ZU TEXTILEN WERKZEUGEN**

(71) Anmelder: Groz-Beckert KG, 72458 Albstadt (DE)
(72) Erfinder: Svejda, Miroslav, DE - 72336 Balingen (DE); Schöller, Eric, DE - 72459 Albstadt Pfeffingen (DE)

(57) **Zusammenfassung**

Es wird ein Verfahren und ein äquivalentes System zur Übermittlung von Informationen (9, 12) zu textilen Werkzeugen - vorzugsweise zu Strick- und Filznadeln - von einer Werkzeugvertriebsorganisation (1) zum Werkzeugnutzer (2) beschrieben und beansprucht.

Bei dem System wird ein Typ textiler Werkzeuge von der Werkzeugvertriebsorganisation (1) jeweils mit einer Bezeichnung (5) belegt, wobei
• ein Softwaresystem Bestellungen (4) aufnimmt, die auf Werkzeugnutzer (2) zurückgehen,
• zumindest eine Kennzeichnungsvorrichtung (27) vorgesehen ist, mit welcher Mengen textiler Werkzeuge mit Kennzeichen (8) versehbar sind,
• wobei mit dem Softwaresystem die Kennzeichnungsvorrichtung (27) ansteuerbar ist und diese Kennzeichen (8) vergibt, die die Bezeichnung (5) nicht enthalten,
• wobei ein Versandsystem (7) vorgesehen ist,
• wobei ein dem Werkzeugnutzer (2) zugänglicher Informationsträger (10) vorgesehen ist, auf welchem dem Kennzeichen (8) Informationen (9, 12, 19) zu der Menge textiler Werkzeuge zugeordnet sind.

## Beschreibung

Textile Werkzeuge sind bekannt. Im Rahmen der vorliegenden Druckschrift werden unter diesem Terminus Werkzeuge verstanden, die zur Herstellung textiler Produkte geeignet sind und die in der Regel direkten Kontakt zu den textilen Werkstoffen bei der Herstellung der Textilien haben. Beispiele für solche textilen Werkzeuge sind textile Nadeln. Zu solchen Nadeln zählen Stricknadeln, Nähnadeln, Filznadeln und Wirknadeln. Unter den Begriff "textile Werkzeuge" fallen jedoch auch Systemteile, zu denen unter anderem Platinen zu zählen sind. Im Bereich des Webens fallen vor allem Litzen, Schäfte und Riete unter diesen Begriff. Im Bereich der Herstellung textiler Grundprodukte wie Garne und Grundstoffe für Filz sind textile Werkzeuge wie Kardierdrähte in diesem Zusammenhang zu nennen.

Es ist ebenfalls bekannt, verschiedenen - zum Teil industriellen-Produkten Kennzeichnungen anzuhaften, die eine Vielzahl von Informationen zu dem betreffenden Produkt, seiner Qualität, seinem Werdegang und seiner vorgesehenen Weiterverarbeitung enthalten. Ein Beispiel unter vielen ist in diesem Zusammenhang die Ausstattung von Produkten mit so genannten RFID-Etiketten. Die DE 602 14 991 T2 offenbart unter anderem ein solches Etikett, das an einem Produkt angebracht werden soll und eine Reihe der vorgenannten Informationen enthält.

Im Bereich der textilen Werkzeuge sind solche Kennzeichnungen bisher unüblich. Vielmehr hat sich weitgehend durchgesetzt, Mengen textiler Werkzeuge mit sprechenden Bezeichnungen zu versehen: so haben sich unter anderem im Bereich der Filznadeln und Stricknadeln Bezeichnungen ausgeprägt, die zum Teil weltweit von Nutzern textiler Werkzeuge verstanden werden, und aus denen ein großer Teil der Eigenschaften der textilen Werkzeuge hervorgeht. So steht oft eine Buchstabenfolge zu Beginn eines solchen Namens, die die Nadelart angibt (z.B. Vosa Spec). Dieser Buchstabenfolge folgt oft eine Reihe von Zahlen und weiteren Buchstaben, die spezifische Maße wie die Höhe des Nadelfußes oder die Form des Nadelhakens angeben. Die beschriebene Art der Informationsweitergabe bzw. des Transports der Information mit den textilen Werkzeugen hat sich in der Vergangenheit bewährt, da sie eine große Transparenz ermöglichte. Viele Glieder der textilen Wertschöpfungskette konnten der Werkzeugbezeichnung wertvolle Informationen zu den Werkzeugen ansehen bzw. entnehmen. Dieser Umstand ist insbesondere im Bereich der industriellen Werkzeugnutzer von Vorteil, da die textilen Werkzeuge in Industriebetrieben einerseits oft lange lagern und andererseits auch großer Volatilität unterliegen.

Insbesondere in jüngerer Zeit hat sich ein großer Teil der textilen Wertschöpfungskette in Schwellenländer verlagert, die dankenswerterweise oft eine hohe Wachstumsdynamik aufweisen. Zu den Nachteilen dieser Wachstumsdynamik für die industriellen Werkzeugnutzer- also die Unternehmen die Textilien herstellen - und deren Auftraggeber - dies sind oft Handelsketten für textile Produkte, die oft auch Fertigungs Know-how an die Werkzeugnutzer weitergeben - zählt jedoch eine große Personalfluktuation im Bereich der Werkzeugnutzer. Diese Personalfluktuation führt zum Abfluss an geheimem Herstellungs-Know-how. Zu diesem Herstellungs Know-how zählt auch die Auswahl textiler Werkzeuge für einen bestimmten Fertigungsauftrag. Weitere Informationen, die in diesem Zusammenhang von Wichtigkeit sind, sind natürlich auch Informationen zu den Einsatzbedingungen der textilen Werkzeuge. Die beiden letzteren Informationen werden oft auch von Vertriebsorganisationen textiler Werkzeuge geliefert. Ein Teil dieser Vertriebsorganisationen ist auch den Herstellern textiler Werkzeuge angegliedert. Ein anderer Teil dieser Vertriebsorganisationen arbeitet als Handelsvertreter oder Zwischenhändler für einen oder mehrere Hersteller textiler Werkzeuge.

Aus den genannten Gründen besteht die Aufgabe der vorliegenden Erfindung darin, ein Verfahren und ein System vorzuschlagen, das es gestattet, den Gliedern der textilen Wertschöpfungskette gezielt und gegebenenfalls selektiv die notwendigen Informationen zu den textilen Werkzeugen an die Hand zu geben. Der Verlust von Herstellungs Know-how soll hierbei so weit wie möglich vermieden werden.

Die Aufgabe wird gelöst durch ein Verfahren nach Anspruch 1 und ein System nach Anspruch 12.

Nach dem vorliegenden Verfahren wird ein Typ textiler Werkzeuge von einer Vertriebsorganisation mit einer Bezeichnung belegt, bei der es sich durchaus um eine sprechende Bezeichnung handeln kann. Oft wird diese Bezeichnung auch in einem Softwaresystem mitgeführt, das den Materialfluss in der Vertriebsorganisation abbildet.

Als Folge eines Bestellvorgangs durch einen Kunden wird eine Menge textiler Werkzeuge jedoch mit einem Kennzeichen versehen, das sich von dieser Bezeichnung unterscheidet. Diesem Kennzeichen ist vorteilhafterweise die Bezeichnung auch nicht anzusehen und sie geht auch - zunächst - durch elektronisches Auslesen nicht aus dem Kennzeichen hervor. Vielmehr ist dieses Kennzeichen spezifisch für den jeweiligen Kunden und/oder den jeweiligen Auftrag und/oder den jeweiligen Betrieb und/oder die jeweilige Charge der textilen Werkzeuge. Oft wird dieses Kennzeichen sogar von dem Werkzeugnutzer und der Vertriebsorganisation abgestimmt.

Die erwähnte Menge textiler Werkzeuge wird an den Werkzeugnutzer versendet, was in der Regel durch Erfüllungsgehilfen der Vertriebsorganisation erfolgt. Oft spielt das vorerwähnte Softwaresystem hierbei eine Rolle: Angabe der Kundenaddresse, Auftragsnummer oft ist auch der Versand automatisiert.

Zum Ausliefern können spezielle Lieferdienste der Vertriebsorganisation oder kommerzielle Postsysteme bzw. Versanddienste als Erfüllungsgehilfe der Geschäftspartner herangezogen werden. Das zumindest eine Kennzeichen wird bei der Versendung und/oder der Auslieferung der Menge textiler Werkzeuge mit dieser mitgeführt bzw. haftet dieser an. Die Vertriebsorganisation gewährt dem Werkzeugnutzer Zugang zu einem Informationsträger. Auf diesem Informationsträger sind dem Kennzeichen bzw. der Kennung, die das Kennzeichen aufweist, Informationen zu der Menge textiler Werkzeuge zugeordnet. Wie bereits oben erwähnt, können diese Informationen in Spezifikationen der Werkzeuge bestehen (Maße, Werkzeugart, Werkzeugmaterial, Form der Spitzen bzw. der Haken aber auch Informationen zu der gewünschten Verwendung der Werkzeuge).

Bei den Werkzeugnutzern und bei den Vertriebsorganisationen handelt es sich in der Regel um Firmen, die eine Mehrzahl von Angestellten bzw. Erfüllungsgehilfen haben. In der Regel wird der Werkzeugnutzer daher nur einer Untermenge seiner Angestellten bzw. Erfüllungsgehilfen den Zugang zu dem Informationsträger einräumen, der ihm von der Vertriebsorganisation gewährt wird. Bei dem Einräumen des Zugangs kann es sich um die Weiterleitung eines Codes oder Passwords handeln, es kann jedoch auch sein, dass der Informationsträger, der auch als Chip, DVD, Stick (also als elektronischer Datenträger/Informationsträger) oder Hardcopy verkörpert sein kann, dem Werkzeugnutzer übergeben wird. Hierzu werden weiter unten weitere Ausführung gemacht. Oft wird es sich auf Seiten des Werkzeugnutzers - oft jedoch auch auf Seiten der Vertriebsorganisation - anbieten, lediglich beschränkten Personenkreisen unterschiedliche Berechtigungen zur Einsicht in den Informationsträger zu gewähren.

Zusätzlich können auf dem Informationsträger auch Informationen zu Geschäftsbedingungen, Preisen und Ähnlichem in Bezug auf die Menge textiler Werkzeuge abgelegt werden. Generell kann die Bezeichnung, die zunächst auf Seiten der Vertriebsorganisation vergeben wird, ebenfalls betriebsintern sein und sie muss der Menge textiler Werkzeuge nicht unbedingt anhaften. In der Regel ist es vorteilhaft, wenn das Kennzeichen die Bezeichnung nicht enthält und auch nicht an sie erinnert. Das Kennzeichen sollte vorteilhafter Weise der Menge textiler Werkzeuge anhaften. In der Regel ist die Menge textiler Werkzeuge eine Teilmenge der Werkzeuge eines Typs.

Vorteilhafterweise werden unterschiedliche Mengen an Werkzeugen eines Typs von der Vertriebsorganisation unterschiedlichen Werkzeugnutzern geliefert. Vorteilhaft ist hierbei auch, wenn zumindest verschiedene Mengen dieser Werkzeuge eines Typs bei der Vertriebsorganisation unter der gleichen Bezeichnung geführt werden. Alternativ oder ergänzend könnte jedoch eine Vertriebsorganisation, die über ein Softwaresystem zur Überwachung ihres Materialflusses verfügt, in diesem lediglich einen Hinweis auf ein Unterverzeichnis als Bezeichnung verwenden. In diesem Unterverzeichnis müssten dann die Kennzeichen der verschiedenen Werkzeugnutzer aufgelistet sein.

Vorteilhaft ist jedoch auch, alle Werkzeuge eines Typs unter einer Bezeichnung zu führen. Vorteilhaft ist in diesem Zusammenhang auch, Mengen an Werkzeugen die unterschiedlichen Kunden geliefert werden, mit unterschiedlichen Kennzeichen zu versehen. Hierbei ist zu betonen, dass es sich bei diesem Kennzeichen nicht um unterschiedliche länderspezifische Produktbezeichnungen (unterschiedliche Sprachen) handelt, sondern dass diese Kennzeichen von Kunde zu Kunde verschieden sein können bzw. sollten.

Für die Zwecke der vorliegenden Druckschrift kann eine Menge textiler Werkzeuge ein einzelnes textiles Werkzeug sein, das das Kennzeichen trägt. Die Menge textiler Werkzeuge kann jedoch auch ein Gebinde textiler Werkzeuge sein, das das Kennzeichen trägt. Oft werden mehrere textile Werkzeuge auch in Verpackungen transportiert. In diesem Fall ist es vorteilhaft, die Verpackung mit dem Kennzeichen zu versehen.

Oft werden textile Werkzeuge auf die spezifische Anforderung von Kunden hin gefertigt. In diesem Fall wird die Vertriebsorganisation nach technischen Tests oder Überlegungen das textile Werkzeug dem Werkzeugnutzer vorschlagen oder gar eine Neuentwicklung oder Anpassung bestehender Werkzeuge vornehmen. Oft wird einer der beiden Partner anschließend das Kennzeichen für diesen Werkzeugtyp vorschlagen.

Vorteilhafterweise enthält der Informationsträger Informationen zu verschiedenen Nadeltypen, die mit unterschiedlichen Kennzeichen versehen sind. Die Informationen zu den unterschiedlichen Nadeltypen sind den Kennzeichen zugeordnet und können so anhand der Kennzeichen ausfindig gemacht werden.

Ein Informationsträger kann eine Hardcopy sein. Er kann eine Tabelle tragen bzw. enthalten. In der Regel wird ein Informationsträger jedoch elektrisch oder elektronisch auslesbar sein. Vorteilhaft ist in diesem Zusammenhang, wenn das Kennzeichen eine elektronisch auslesbare Kennung umfasst und die Informationen des Informationsträgers anhand dieser Kennung auffindbar sind. Insbesondere, wenn der Informationsträger über allgemein zugängliche Informationsmittel (Mittel der elektronischen und elektrischen Fernkommunikation) kontaktierbar ist, ist es vorteilhaft, den Informationsträger zu verschlüsseln bzw. nur den Inhabern von Codes bzw. Passwörtern zugänglich zu machen.

Vorteilhaft ist es auch, wenn der Informationsträger eine Art Datenraum darstellt, die sowohl von Werkzeugnutzer als auch von der Vertriebsorganisation mit Informationen gefüllt werden kann. Solche Informationen können auch den Produktionsprozess der textilen Produkte des Werkzeugnutzers betreffen. Vorteilhaft sind auch Daten, die die kaufmännischen Vereinbarungen zwischen Werkzeugnutzer und Vertriebsorganisation betreffen. Hierzu gehören Preise und Geschäftsbedingungen. Als Kennung kommen alle möglichen automatisch auslesbaren Informationsträger infrage.

Ein vorteilhaftes System zur Übermittlung von Informationen zu textilen Werkzeugen von einer Vertriebsorganisation zum Werkzeugnutzer enthält folgende Merkmale:

Oft ist ein Softwaresystem vorhanden, das den Materialfluss innerhalb der Vertriebsorganisation abbildet. Verschiedenen Werkzeugtypen werden hier Bezeichnungen zugeordnet. Oft handelt es sich hierbei um sprechende Bezeichnungen, die auch außerhalb der Vertriebsorganisation bekannt sind.

Vorteilhaft ist, wenn dieses Softwaresystem oder ein anderes auch Bestellungen von Werkzeugnutzern aufnimmt. In der Regel werden diese Bestellungen in solchen kaufmännischen Systemen wie SAP oder Oracle geführt.

Die Vertriebsorganisation verfügt vorteilhafterweise über eine Kennzeichnungsvorrichtung, mit welcher Mengen textiler Werkzeuge mit Kennzeichen versehbar sind.

Weitere Vorteile treten ein, wenn die Kennzeichnungsvorrichtung mit dem Softwaresystem ansteuerbar ist und das Softwaresystem die Kennzeichnungsvorrichtung veranlasst, Mengen textiler Werkzeuge mit Kennzeichen zu versehen, die eine elektronisch auslesbare Kennung enthalten, und die die vorerwähnte Bezeichnung eben nicht beinhalten. In der Regel wird das Softwaresystem zu diesem Behuf dazu programmiert sein, Kennzeichen zu vergeben, die von der Vertriebsorganisation und/oder dem Werkzeugnutzer ausgewählt worden sind.

Vertriebsorganisationen für textile Werkzeuge verfügen in der Regel über Versandabteilungen oder automatisierte Versandeinrichtungen. Diesen werden oft von dem Softwaresystem, das den Materialfluss abbildet, Informationen zu der zu versendenden Menge textiler Werkzeuge übergeben.

Zum Ausliefern bedienen sich solche Vertriebsorganisationen interner oder externer Post- bzw. Lieferorganisationen. Dies ist für die Zwecke der vorliegenden Druckschrift gleichbedeutend. Während des Versandes wird das Kennzeichen mit der Menge textiler Werkzeuge mitgeführt. Das System beinhaltet des Weiteren einen dem Werkzeugnutzer zugänglich gemachten Informationsträger. Auf diesem Informationsträger befinden sich Informationen zu der Menge textiler Werkzeuge, die der Kennung der entsprechenden Menge textiler Werkzeuge zugeordnet sind und die damit anhand der Kennung ausgelesen werden können.

Der Informationsträger kann Bestandteil des Computersystems des Werkzeugnutzers sein. In der Regel ist es jedoch von Vorteil, wenn der Informationsträger sich im Zugriff von Werkzeugnutzer und Vertriebsorganisation befindet. Zu diesem Behuf kann der Informationsträger eine Website des Werkzeugnutzers oder der Vertriebsorganisation sein. Alternativ oder ergänzend ist es vorteilhaft, eine so genannte Portallösung zu verwenden, die das Füllen und/oder das Auslesen des Informationsträgers erlaubt.

Es ist vorteilhaft, den Informationsträger mit Passwörtern, Codes oder auch über Standleitungen zwischen dem Werkzeugnutzer und der Vertriebsorganisation so zu schützen, dass insbesondere Dritte nicht auf den Informationsträger zugreifen können. Weitere Vorteile bietet es, innerhalb der Firmen "Werkzeugnutzer" und/oder "Vertriebsorganisation" unterschiedliche Berechtigungen bzw. gar keine Berechtigungen zu verteilen. Auch diese Maßnahmen können durch die Vergabe von (ggf. unterschiedlichen) Codes oder von Hierarchiestufen bzw. Berechtigungsstufen in den IT-Systemen der verschiedenen Firmen vorgenommen werden. Diese Maßnahmen können durch die Vertriebsorganisation ggf. in Ansprache mit dem Werkzeugnutzer erfolgen. Es ist jedoch sicherlich auch denkbar, den Zugang zum Informationsträger so zu gestalten, dass der Werkzeugnutzer die Vergabe von Zugriffsberechtigungen (und ggf. Schreibberechtigungen) autonom vornehmen kann.

Vorteilhaft ist es auch, wenn der Werkzeugnutzer über zumindest ein Auslesesystem für die Kennung verfügt. Dieses Auslesesystem kann vollautomatisch funktionieren. Es kann vorteilhafterweise auch automatisch Kontakt zu den Informationsträger und gegebenenfalls direkt zu den entsprechenden Informationen herstellen.
- Fig. 1: Figur 1 zeigt eine Verpackung textiler Werkzeuge, wie sie zum Beispiel im Stricknadelbereich eingesetzt wird
- Fig. 2: Figur 2 ist ein Diagramm, das eine Berechtigungshierarchie veranschaulicht
- Fig. 3: Figur 3 zeigt schematisch ein erstes System zur Übermittlung von Informationen zu textilen Werkzeugen...
- Fig. 4: Figur 4 zeigt schematisch ein zweites System zur Übermittlung von Informationen zu textilen Werkzeugen.
- Fig. 5: Figur 5 zeigt schematisch ein drittes System zur Übermittlung von Informationen zu textilen Werkzeugen.
- Fig. 6: Figur 6 zeigt ein weiteres Ausführungsbeispiel einer Verpackung textiler Werkzeuge.

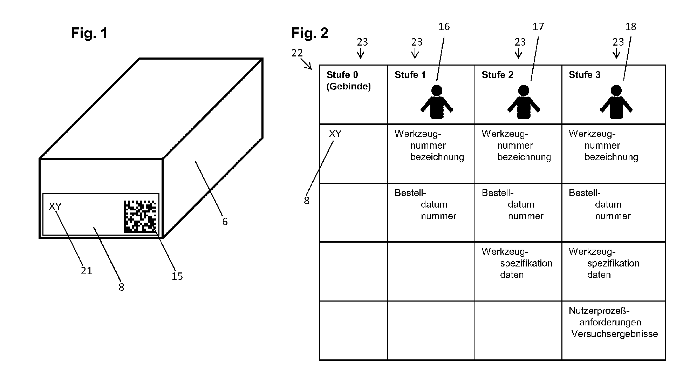

Figur 1 zeigt eine quaderförmige Verpackung 6, die ein Kennzeichen 8 trägt. Auf dem Kennzeichen 8 ist die elektronisch auslesbare Kennung 15 und der Kennzeichentext 21 zu sehen. Letzterer wird vorteilhafterweise eingesetzt, damit das Personal insbesondere des Werkzeugnutzers die Werkzeugmenge, die in der Verpackung 6 enthalten ist, bezeichnen kann.

Figur 2 zeigt eine Tabelle, wie sie gemäß der Erfindung genutzt werden kann: Dem Kennzeichen 8 sind die in der Tabelle 22 enthaltenen Informationen zu der in der Verpackung 6 enthaltenen Menge textiler Werkzeuge zugeordnet. Die Spalten 23 der Tabelle 22 verdeutlichen, dass die Angestellten 16, 17, 18 des Werkzeugnutzers 2 verschiedenen Berechtigungsstufen zugeordnet sind, die unterschiedlichen Zugriff auf unterschiedliche Informationsmengen haben. Die Tabelle 22 kann jedoch auch als Symbol für die Zugriffshierarchie elektronisch auslesbarer Informationsträger 10 gesehen werden.

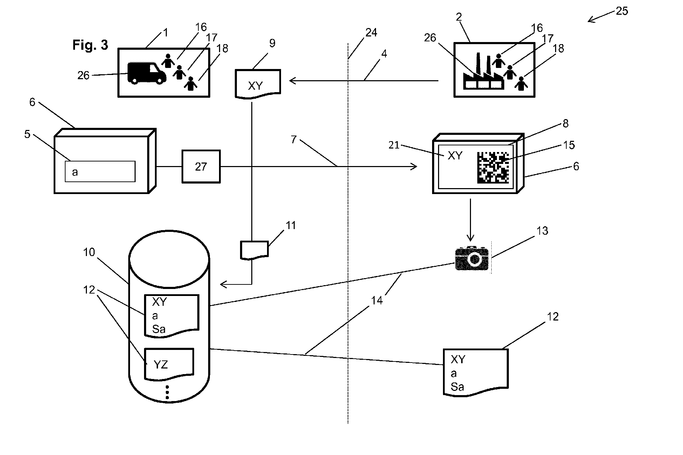

Figur 3 veranschaulicht schematisch ein erfindungsgemäßes System 25. Die Figur 3 wird durch die Linie 24 in den Bereich der Werkzeugvertriebsorganisation 1 und des Werkzeugnutzers 2 eingeteilt. Die Werkzeugvertriebsorganisation 1 und der Werkzeugnutzer 2 sind Firmen, denen Erfüllungsgehilfen 16, 17,18 mit verschiedenen Berechtigungsstufen und Betriebsgegenstände 26 zugeordnet sind. Im vorliegenden Ausführungsbeispiel beginnen die Tätigkeiten von Werkzeugnutzer 2 und Werkzeugvertriebsorganisation 1 mit einem Bestellvorgang 4. Im Rahmen dieses Bestellvorgangs 4 übermittelt der Werkzeugnutzer 2 der Werkzeugvertriebsorganisation 1 spezifische Informationen 9 zu dem Bestellvorgang 4. Die spezifischen Informationen des Bestellvorgangs werden in diesem Fall von der Werkzeugvertriebsorganisation 1 dem Informationsträger 10 übergeben, was durch das Symbol 11 veranschaulicht wird. Auf dem Informationsträger 10 befinden sich weitere Kunden bzw. chargenspezifische Informationen 12. Diese werden den spezifischen Informationen des Bestellvorganges 9 zugeordnet bzw. beim Auslesen wird die Zuordnung ersichtlich.

Auf Seiten der Werkzeugvertriebsorganisation 1 beginnt nun die Arbeit an dem Auftrag. Eine Menge textiler Werkzeuge wird in der Verpackung 6 abgepackt bzw. für einen Zusendevorgang 7 vorbereitet. Hierbei ist es bei vielen Werkzeugvertriebsorganisationen 1 möglich, dass auf Lagervorrat zurückgegriffen wird. Natürlich ist es ebenso gut möglich, dass kein Lagerbestand des entsprechenden Typs textiler Werkzeuge vorhanden ist, so dass ein Fertigungsauftrag an einen Werkzeughersteller ergehen muss. In vielen Fällen können der Werkzeughersteller und die Werkzeugvertriebsorganisation 1 Bestandteil eines Konzerns sein. Der Träger der Bezeichnung 5 macht klar, dass auch die auf Seiten der Werkzeugvertriebsorganisation 1 bedeutende Bezeichnung 5 der Menge textiler Werkzeuge anhaften kann. Erforderlich ist dies jedoch keineswegs, da es oft genügt, Mengen textiler Werkzeuge in einem kaufmännischen Softwaresystem zu verwalten. In den Figuren 3, 4 und 5 wurde auf die Darstellung des Softwaresystems und allfälliger Verbindungsleitungen, über die das Softwaresystem anderer Elemente des Systems 25 ansteuert oder ausliest, verzichtet. Die Menge textiler Werkzeuge gelangt vor ihrer Auslieferung an den Werkzeugnutzer 2 zu der Kennzeichnungsvorrichtung 27 und wird dort mit dem Kennzeichen 8 versehen. Bei der Kennzeichnungsvorrichtung 27 kann es sich unter Anderem um eine Etikettiervorrichtung handeln, es kann jedoch auch sein, dass eine bestehende Verpackung, ein bestehendes Etikett usw. weiter beschriftet wird. Desweiteren können textile Werkzeuge natürlich auch mit Gravursystemen oder mit Lasern beschriftet werden. Der Pfeil 7 steht für den Zusendevorgang der Menge textiler Werkzeuge von der Werkzeugvertriebsorganisation 1 zu dem Werkzeugnutzer 2. Wie bereits in der einleitenden Beschreibung erwähnt, umfasst dieser Zusendevorgang 7 eine Versandhandlung (an wen wird die Menge textiler Werkzeuge verschickt) und einen Versendevorgang, bei dem die Menge textiler Werkzeuge zu einem Werk des Werkzeugnutzers 2 gebracht wird. Die von der Kennzeichnungsvorrichtung 27 gekennzeichnete Verpackung 6 ist am rechten Bildrand - also im Bereich des Werkzeugnutzers 2 - noch einmal dargestellt. Das Kennzeichen 8 der Verpackung 6 trägt einen Text 21, der es dem Personal des Werkzeugnutzers 2 gestattet, die Menge und oder den Typ der textilen Werkzeuge sprachlich zu benennen. Im vorliegenden Ausführungsbeispiel trägt das Kennzeichen 8 auch eine Kennung 15, die unter Anderem mit dem elektronischen Auslesemittel 13 elektronisch auslesbar ist. Die Kennung 15 enthält einen Link zu dem Informationsträger 10, mit dem über Fernkommunikationsmittel 14 Informationen 12 aus dem Informationsträger 10 ausgelesen werden können. Diese Informationen 12 können ebenfalls wieder über Fernkommunikationsmittel 14 in den Bereich des Werkzeugnutzers 2 übermittelt werden. Zu erwähnen bleiben noch die Erfüllungsgehilfen 16, 17, 18 der Vertriebsorganisation 1 und des Werkzeugnutzers 2, die mit verschiedenen Berechtigungsstufen zum Zugang zu Informationen versehen sind. In der Regel wird das oben dargestellte Auslesen der Informationen anhand des Links bzw. anhand der Kennung 15 zusätzliche Codes oder Passwörter erfordern. Auch die unterschiedlichen Berechtigungsstufen können unter anderem anhand unterschiedlicher Codes realisiert werden.

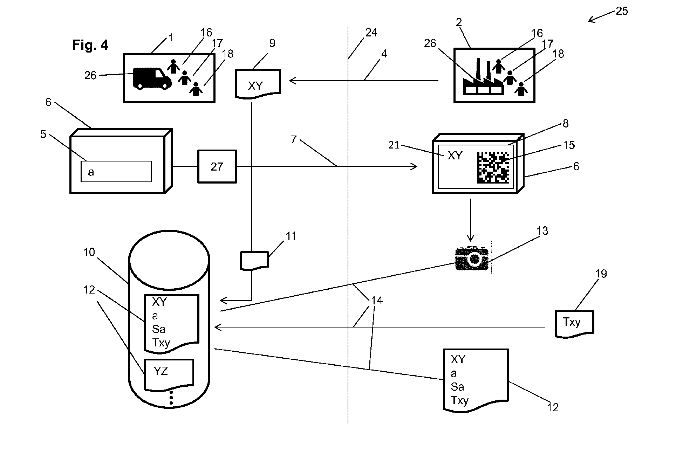

Figur 4 zeigt ein fast identisches System 25 wie Figur 3. Zusätzlich zu den Gegenständen, die in Figur 3 abgebildet sind, symbolisiert Figur 4 jedoch auch, dass dem Werkzeugnutzer 2 auch eine Schreibberechtigung auf dem Informationsträger 10 eingeräumt werden kann. Dieser Umstand wird dadurch symbolisiert, dass auch Produktionsprozessinformationen 19 über Fernkommunikationsmittel 14 an den Informationsträger 10 übermittelt werden können. Natürlich können auch andere Arten von Informationen in der beschriebenen Weise durch den Werkzeugnutzer 2 auf dem Informationsträger 10 hinterlegt werden.

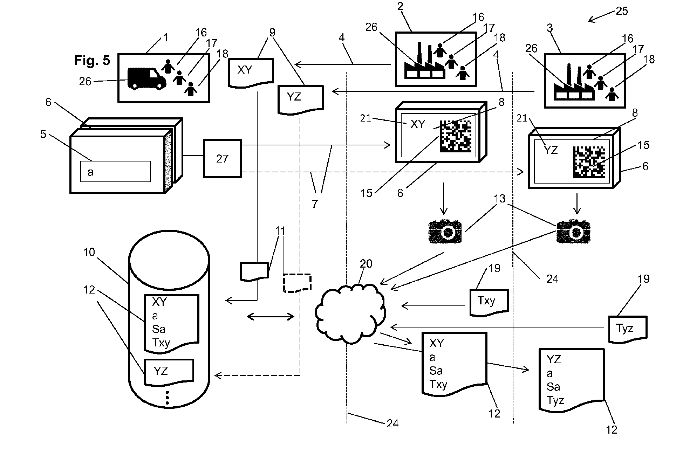

Figur 5 zeigt ein weiteres drittes Ausführungsbeispiel der Erfindung, das auf dem Ausführungsbeispiel aus Figur 4 aufbaut. Jedoch sind in Figur 4 zwei Werkzeugnutzer 2, 3 statt nur einem Werkzeugnutzer 2 gezeigt. Auch die Bereiche der beiden Werkzeugnutzer 2, 3 sind wieder durch eine gestrichelte Linie 24 voneinander abgegrenzt. Beide Werkzeugnutzer 2, 3 haben eine Schreibberechtigung auf dem Informationsträger 10, was in äquivalenter Weise wie in Figur 4 gezeigt ist. Die beiden Werkzeugnutzer 2, 3 haben Kennzeichen 8, welche mit unterschiedlichen Texten 21 ihres Kennzeichens 8 und unterschiedlichen Kennungen 15 ausgestattet sind. Auch diese Maßnahme ist - wie bereits in der einleitenden Beschreibung dargelegt - von Vorteil. Ein weiteres zusätzliches Merkmal des in Figur 5 dargestellten dritten Ausführungsbeispiels besteht in der Verwendung der Cloud 20. Im vorliegenden Ausführungsbeispiel werden die Daten der Werkzeugnutzer 2, 3 und der Werkzeugvertriebsorganisation 1 in der Cloud 20 abgelegt und den Berechtigten 16, 17, 18 je nach Berechtigungshierarchie zugänglich gemacht.

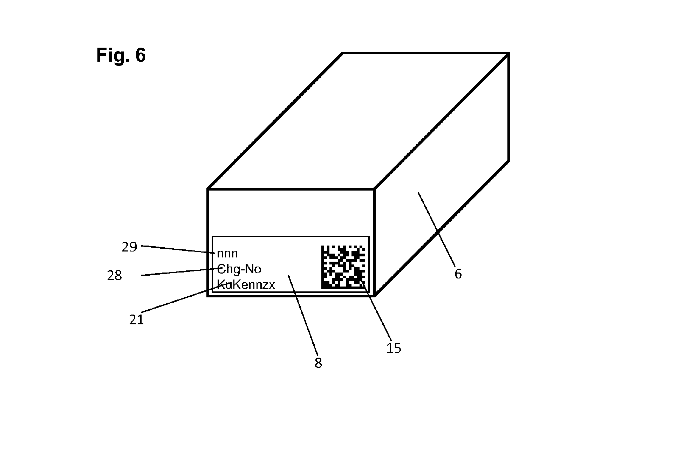

Figur 6 zeigt ein weiteres Gebinde 6 textiler Werkzeuge. Auf dem Kennzeichen 8 befinden sich neben der Kennung 15 und dem Text des Kennzeichens 21 auch die Chargennummer 28 und die Anzahl der in dem Gebinde 6 enthaltenen textilen Werkzeuge 29. Auch das Vorhandensein dieser Informationen 28, 29 auf dem Kennzeichen 8 ist für alle Ausführungsbeispiele der Erfindung von Vorteil.

| Bezugszeichenliste | |
|---|---|
| 1 | Werkzeugvertriebsorganisation |
| 2 | Werkzeugnutzer |
| 3 | Werkzeugnutzer |
| 4 | Bestellvorgang |
| 5 | Bezeichnung |
| 6 | Gebinde / Verpackung textiler Werkzeuge |
| 7 | Zusendevorgang |
| 8 | Kennzeichen |
| 9 | Spezifische Informationen des Bestellvorgangs |
| 10 | Informationsträger |
| 11 | Übergabe der spezifischen Daten des Bestellvorgangs, des Kennzeichens und der Bezeichnung (ggf. weitere Werkzeugdaten) in den Informationsträger |
| 12 | Kunden-, Auftrags-, Betrieb-, Chargenspezifischer Informationsumfang. |
| 13 | Elektronisches Auslesemittel |
| 14 | Fernkommunikationsmittel |
| 15 | Kennung |
| 16 | Erfüllungsgehilfe Werkzeugvertriebsorganisation oder Werkzeugnutzer Berechtigung 1 |
| 17 | Erfüllungsgehilfe Werkzeugvertriebsorganisation oder Werkzeugnutzer Berechtigung 2 |
| 18 | Erfüllungsgehilfe Werkzeugvertriebsorganisation oder Werkzeugnutzer Berechtigung 3 |
| 19 | Produktionsprozessinformationen |
| 20 | Cloud |
| 21 | Text des Kennzeichens |
| 22 | Tabelle |
| 23 | Spalte der Tabelle |
| 24 | Gestrichelte Linie |
| 25 | System |
| 26 | Betriebsgegenstände |
| 27 | Kennzeichnungsvorrichtung |
| 28 | Chargennummer/Nummer der Charge zu der die Menge textiler Werkzeuge gehört |
| 29 | Anzahl textiler Werkzeuge in einer Verpackung/einem Gebinde |

## Patentansprüche

1. Verfahren zur Übermittlung von Informationen (9, 12) zu textilen Werkzeugen
- vorzugsweise zu Strick- und Filznadeln - von einer Werkzeugvertriebsorganisation (1) zum Werkzeugnutzer (2),
• bei dem zumindest ein Typ textiler Werkzeuge von der Werkzeugvertriebsorganisation (1) jeweils mit zumindest einer Bezeichnung (5) belegt wird,
**dadurch gekennzeichnet, dass**
• als Folge eines Bestellvorganges (4) durch einen Werkzeugnutzer (2) eine Menge textiler Werkzeuge dieses Typs mit zumindest einem Kennzeichen (8) versehen wird, wobei das Kennzeichen (8) sich von der Bezeichnung (5) unterscheidet und/oder diese nicht enthält,
• wobei das Kennzeichen (8) spezifisch für den jeweiligen Kunden, den jeweiligen Auftrag, den jeweiligen Betrieb und/oder die jeweilige Charge ist,
• wobei die bei dem Bestellvorgang (4) bestellte Menge textiler Werkzeuge an den Werkzeugnutzer (2) versendet wird,
• wobei das zumindest eine Kennzeichen (8) zur Kennzeichnung der Menge textiler Werkzeuge mit der Menge textiler Werkzeuge mitgegeben wird,
• wobei die Menge textiler Werkzeuge frei von der Bezeichnung (5) ist,
• wobei das Kennzeichen (8) eine Kennung (15) aufweist,
• wobei die Werkzeugvertriebsorganisation (1) dem Werkzeugnutzer (2) Zugang zu einem Informationsträger (10) einräumt,
• und wobei der Kennung (15) auf diesem Informationsträger (10) Informationen (9, 12) zu der Menge textiler Werkzeuge zugeordnet sind.

2. Verfahren nach Anspruch 1
**dadurch gekennzeichnet, dass**
• zumindest zwei Werkzeugnutzern (2, 3), die mit Mengen textiler Werkzeuge eines Typs beliefert werden,
• Mengen textiler Werkzeuge eines Typs mit unterschiedlichen Kennzeichen (8) ausgeliefert werden.

3. Verfahren nach einem der vorstehenden Ansprüche
**dadurch gekennzeichnet,**
**dass** die Menge textiler Werkzeuge
• ein einzelnes textiles Werkzeug,
• ein Gebinde (6) textiler Werkzeuge,
• oder eine Verpackung (6) mit einer Menge textiler Werkzeuge ist,
**und dass** diese Menge textiler Werkzeuge das Kennzeichen (8) trägt.

4. Verfahren nach einem der vorstehenden Ansprüche
**dadurch gekennzeichnet, dass**
• der Werkzeugnutzer (2) vor oder bei der Bestellung (4) Anforderungen an das textile Werkzeug der Werkzeugvertriebsorganisation (1) übermittelt,
• die Werkzeugvertriebsorganisation (1) das Werkzeug aus bestehenden Werkzeugtypen vorschlägt oder eine Neuentwicklung eines geeigneten Werkzeugs vornimmt.

5. Verfahren nach einem der vorstehenden Ansprüche
**dadurch gekennzeichnet, dass**
der Informationsträger (10) verschiedenen Kennzeichen (8) Informationen (9, 12) zu verschiedenen Nadeltypen zuordnet.

6. Verfahren nach dem vorstehenden Anspruch
**dadurch gekennzeichnet, dass**
der Informationsträger (10) elektronisch ausgelesen wird.

7. Verfahren nach dem vorstehenden Anspruch
**dadurch gekennzeichnet, dass**
der Informationsträger (10) über Mittel der elektrischen oder elektronischen Fernkommunikation (14) ausgelesen und/oder mit Informationen (9, 12) gefüllt wird.

8. Verfahren nach dem vorstehenden Anspruch
**dadurch gekennzeichnet, dass**
der Informationsträger (10) von den Werkzeugnutzern (2, 3) und/oder der Werkzeugvertriebsorganisation (1) mit Informationen (9, 12, 19) gefüllt wird.

9. Verfahren nach einem der vier vorstehenden Ansprüche
**dadurch gekennzeichnet, dass**
in dem Informationsträger (10) Informationen (19) zum Produktionsprozess der textilen Produkte des Werkzeugnutzers (2, 3) abgelegt werden.

10. Verfahren nach einem der vorstehenden Ansprüche
**dadurch gekennzeichnet, dass**
die zumindest eine Kennung (15) elektronisch ausgelesen wird.

11. Verfahren nach dem vorstehenden Anspruch
**dadurch gekennzeichnet, dass**
die Kennung (15)
• einen Barcode enthält,
• ein RFID Modul beinhaltet,
• und/oder einen Data-Matrix-Code enthält.

12. System zur Übermittlung von Informationen zu textilen Werkzeugen - vorzugsweise zu Strick und Filznadeln - von einer Werkzeugvertriebsorganisation (1) zum Werkzeugnutzer (2) mit folgenden Merkmalen:
• einem Softwaresystem, das den Materialfluss innerhalb der Werkzeugvertriebsorganisation (1) verzeichnet und Werkzeugtypen zumindest eine Bezeichnung (5) zuordnet,
**dadurch gekennzeichnet,**
• **dass** dieses Softwaresystem Bestellungen (4) aufnimmt, die auf Werkzeugnutzer (2) zurückgehen,
• **dass** zumindest eine Kennzeichnungsvorrichtung (27) vorgesehen ist, mit welcher Mengen textiler Werkzeuge mit Kennzeichen (8) versehbar sind, die eine elektronisch auslesbare Kennung (15) enthalten,
• **dass** mit dem Softwaresystem die Kennzeichnungsvorrichtung (27) ansteuerbar ist, wobei das Softwaresystem derart eingestellt ist, dass die Kennzeichnungsvorrichtung (27) die Mengen textiler Werkzeuge mit Kennzeichen (8) versieht, die die Bezeichnung (5) nicht enthalten,
• **dass** ein Versandsystem (7) vorgesehen ist, mit welchem die Menge textiler Werkzeuge dem Werkzeugnutzer (2) zusendbar ist, wobei das Kennzeichen (8) mit der Menge textiler Werkzeuge mitgeführt wird,
• **dass** ein dem Werkzeugnutzer (2) zugänglicher Informationsträger (10) vorgesehen ist, auf welchem der Kennung (15) Informationen (9, 12, 19) zu der Menge textiler Werkzeuge zugeordnet sind.

13. System nach dem vorstehenden Anspruch
**dadurch gekennzeichnet, dass**
der Informationsträger (10)
• Bestandteil des Computersystems des Werkzeugnutzers (2) ist,
• eine Website des Werkzeugnutzers (2) oder der Werkzeugvertriebsorganisation (1) ist,
• und/oder ein Portal des Werkzeugnutzers (2) oder der Werkzeugvertriebsorganisation (1) ist.

14. System nach dem vorstehenden Anspruch
**dadurch gekennzeichnet, dass**
der Informationsträger (10) derart einstellbar ist, dass er von dem Werkzeugnutzer (2) und/oder der Werkzeugvertriebsorganisation (1) nur mit zumindest einem zusätzlichen Passwort ausgelesen werden kann.

15. System nach einem der vorstehenden Ansprüche
**dadurch gekennzeichnet, dass**
der Informationsträger (10) derart eingestellt ist, dass er Erfüllungs- und/oder Verrichtungsgehilfen (16, 17,18) des Werkzeugnutzers (2) und/oder der Werkzeugvertriebsorganisation (1) einen nach Berechtigungsstufen differenzierten Zugang zu Informationen (9, 12, 19) zu der Menge textiler Werkzeuge gewährt.

16. System nach einem der vorstehenden Ansprüche
**gekennzeichnet durch**
zumindest ein werkzeugnutzerseitiges Auslesesystem (13), mit dem die Kennung (15) auslesbar ist.
